# EUROPEAN PATENT APPLICATION

(11) **EP 4 489 118 A1**
(43) Date of publication of application: **08.01.2025**
(21) Application number: 23759720.8
(22) Date of filing: 10.02.2023
(51) Int. Cl.: H01M 4/38, H01M 4/36

(54) **NEGATIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 28.02.2022 JP 2022029322
(71) Applicant: Panasonic Intellectual Property Management Co., Ltd., Osaka-shi, Osaka 540-6207 (JP)
(72) Inventor: JIN, Takuya, Kadoma-shi, Osaka 571-0057 (JP); ASANO, Taisuke, Kadoma-shi, Osaka 571-0057 (JP)
(74) Representative: Eisenführ Speiser
(86) International application number: PCT/JP2023/004519
(87) International publication number: WO 2023/162716

(57) **Abstract**

A negative electrode active material for a non-aqueous electrolyte secondary battery according to one example of an embodiment comprises composite particles (30) that include a lithium aluminate phase (31) and a silicon phase (32) dispersed in the lithium aluminate phase (31). The lithium aluminate phase (31) contains boron, and the ratio (MAI/MB) of the aluminum percentage content (MAI) and the boron percentage content (MB) with respect to the total amount of the elements other than oxygen constituting the lithium aluminate phase (31) and the silicon phase (32) is 1.0-30.0, inclusive.

## Description

### TECHNICAL FIELD

The present disclosure relates to a negative electrode active material for a non-aqueous electrolyte secondary battery and a non-aqueous electrolyte secondary battery using this negative electrode active material.

### BACKGROUND ART

In recent years, non-aqueous electrolyte secondary batteries such as lithium-ion batteries have been widely used for use requiring a high capacity, such as on-board use and power storage use. A negative electrode active material, which is a main constituent of a negative electrode, is one of important factors for attempting to increase the capacity of the battery, and therefore various investigations have been made on the negative electrode active material. Among these, use of a material containing silicon (Si-containing material) has attracted attention as a negative electrode active material having a high theoretical capacity density.

As the Si-containing material, a material in which silicon particles are dispersed in a SiO₂ phase (hereinafter, referred to as "SiOx"), a material in which silicon particles are dispersed in a lithium silicate phase represented by Li_{2z}SiO_{2+z} (0<z<2) (hereinafter, referred to as "LSX"), and the like have been known (as for LSX, see Patent Literature 1, for example).

### CITATION LIST

### PATENT LITERATURE

PATENT LITERATURE 1: International Publication No. 2016/35290

### SUMMARY

LSX has a small irreversible capacity compared with SiOx, and has excellent initial charge-discharge efficiency. However, the lithium silicate phase in LSX has low alkali resistance (stability against Li), and may still cause side reactions with Li ions during initial charge, and further improvement of the initial charge-discharge efficiency has been required.

Since the Si-containing material such as LSX causes a large change in volume with charge and discharge, cracking, breakage, and the like easily occur with repeated charge and discharge. It is not easy to achieve good cycle characteristics.

A negative electrode active material for a non-aqueous electrolyte secondary battery according to the present disclosure comprises composite particles including: a lithium aluminate phase; and a silicon phase dispersed in the lithium aluminate phase, wherein the lithium aluminate phase contains boron, and a ratio (MA1/MB) of a content rate of aluminum (MAl) to a content rate of boron (MB) based on a total mass of elements constituting the lithium aluminate phase and the silicon phase other than oxygen is greater than or equal to 1.0 and less than or equal to 30.0.

According to the negative electrode active material of the present disclosure, the non-aqueous electrolyte secondary battery having high capacity and excellent initial charge-discharge efficiency and cycle characteristics may be achieved. A non-aqueous electrolyte secondary battery using the negative electrode active material according to the present disclosure has, for example, good cycle characteristics, and has high initial charge-discharge efficiency compared with a case of using LSX.

### BRIEF DESCRIPTION OF DRAWING

FIG. 1 is a sectional view of a non-aqueous electrolyte secondary battery of an example of an embodiment.
FIG. 2 is a view illustrating a particle cross section of a negative electrode active material of an example of an embodiment.
FIG. 3 represents XRD patterns of a negative electrode active material of an example of an embodiment.

### DESCRIPTION OF EMBODIMENTS

The present inventors have ascertained that initial charge-discharge efficiency of a battery is remarkably improved, compared with a case of using LSX, by using composite particles in which a silicon phase is dispersed in a lithium aluminate phase as a negative electrode active material for a non-aqueous electrolyte secondary battery. The composite particles including the lithium aluminate phase have a higher theoretical capacity density than a carbon-based active material such as graphite, similarly to other Si-containing materials, and contribute to increase in the capacity of the battery.

Meanwhile, use of the composite particles including the lithium aluminate phase as the negative electrode active material largely decreases the capacity with charge and discharge compared with a case of using LSX, and it is not easy to achieve good cycle characteristics. The present inventors have ascertained that the cycle characteristics are remarkably improved by adding a predetermined amount of boron in the lithium aluminate phase. When many gaps are present inside the composite particles, it is considered that cracking and breaking easily occur triggered from the gaps due to expansion and contraction of the particles with charge and discharge to collapse the particle structure, resulting in decrease in the capacity, but adding the predetermined amount of boron reduces the gaps inside the particles. It is considered that the cycle characteristics are consequently improved.

Hereinafter, an example of an embodiment of the negative electrode active material for a non-aqueous electrolyte secondary battery according to the present disclosure and a non-aqueous electrolyte secondary battery using this negative electrode active material will be described in detail. Note that the scope of the present disclosure includes a configuration composed of selective combination of constituents of a plurality of embodiments and modified examples described hereinafter.

Hereinafter, a cylindrical battery housing a wound electrode assembly 14 in a bottomed cylindrical exterior housing can 16 will be exemplified as the non-aqueous electrolyte secondary battery, but the exterior of the battery is not limited to the cylindrical exterior housing can. The non-aqueous electrolyte secondary battery according to the present disclosure may be, for example, a rectangular battery comprising a rectangular exterior housing can, a coin-shaped battery comprising a coin-shaped exterior housing can, or a laminated battery comprising an exterior composed of a laminate sheet including a metal layer and a resin layer. The electrode assembly is not limited to the wound electrode assembly, and may be a stacked electrode assembly in which a plurality of positive electrodes and a plurality of negative electrodes are alternately stacked via a separator.

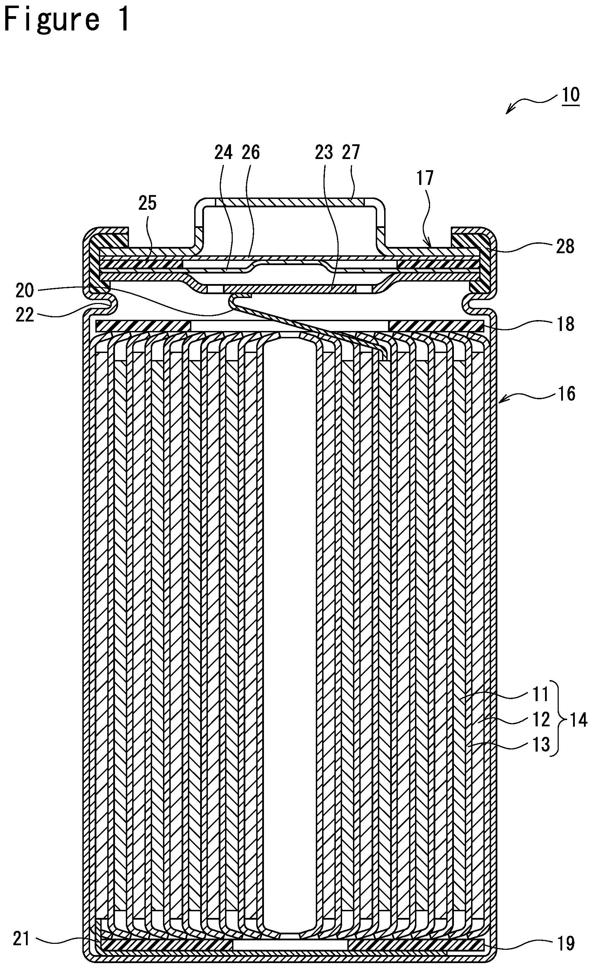

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, an electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), diethyl carbonate (DEC), a mixed solvent thereof, or the like. For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separator 13 are formed to be one size larger than at least the positive electrode 11, and disposed to sandwich the positive electrode 11, for example. The electrode assembly 14 has a positive electrode lead 20 connected to the positive electrode 11 by welding or the like and a negative electrode lead 21 connected to the negative electrode 12 by welding or the like.

The positive electrode 11 has a positive electrode core and a positive electrode mixture layer formed on the positive electrode core. For the positive electrode core, a foil of a metal stable within a potential range of the positive electrode 11, such as aluminum and an aluminum alloy, a film in which such a metal is disposed on a surface layer, or the like may be used. The positive electrode mixture layer includes a positive electrode active material, a conductive agent, and a binder, and is preferably formed on both surfaces of the positive electrode core except for an exposed portion where the positive electrode lead 20 is to be welded. The positive electrode 11 may be produced by, for example, applying a positive electrode slurry including the positive electrode active material, the conductive agent, the binder, and the like on the positive electrode core, and drying and then compressing the applied film to form the positive electrode mixture layer on both surfaces of the positive electrode core.

The positive electrode mixture layer includes a particulate lithium-metal composite oxide as the positive electrode active material. The lithium-metal composite oxide is a composite oxide containing a metal element such as Co, Mn, Ni, and Al in addition to Li. The metal element to constitute the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide is a lithium-metal composite oxide containing Ni, Co, and Mn, or a lithium-metal composite oxide containing Ni, Co, and Al.

Examples of the conductive agent included in the positive electrode mixture layer may include carbon materials such as carbon black such as acetylene black and Ketjenblack, graphite, carbon nanotube (CNT), carbon nanofiber, and graphene. Examples of the binder included in the positive electrode mixture layer may include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide (PEO), and the like.

The negative electrode 12 has a negative electrode core and a negative electrode mixture layer formed on the negative electrode core. For the negative electrode core, a foil of a metal stable within a potential range of the negative electrode 12, such as copper and a copper alloy, a film in which such a metal is disposed on a surface layer, or the like may be used. The negative electrode mixture layer includes a negative electrode active material, a binder, and a conductive agent as necessary, and is preferably formed on both surfaces of the negative electrode core except for an exposed portion where the negative electrode lead 21 is to be welded. The negative electrode 12 may be produced by applying a negative electrode slurry including the negative electrode active material, the binder, and the like on surfaces of the negative electrode core, and drying and then compressing the applied film to form the negative electrode mixture layer on both surfaces of the negative electrode core.

For the binder included in the negative electrode mixture layer, a fluororesin, PAN, a polyimide, an acrylic resin, a polyolefin, and the like may be used as in the case of the positive electrode 11, but styrene-butadiene rubber (SBR) is preferably used. The negative electrode mixture layer preferably includes CMC or a salt thereof, polyacrylic acid (PAA) or a salt thereof, polyvinyl alcohol (PVA), and the like. Among these, SBR; and CMC or a salt thereof, or PAA or a salt thereof are preferably used in combination. The negative electrode mixture layer may include a conductive agent such as CNT.

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene and polypropylene, cellulose, and the like are preferable. The separator 13 may have a single layer structure or a multilayer structure. On a surface of the separator 13, a highly heat-resistant resin layer such as an aramid resin may be formed.

On an interface between the separator 13 and at least one of the positive electrode 11 and the negative electrode 12, a filler layer including an inorganic filler may be formed. Examples of the inorganic filler include oxides containing metal elements such as Ti, Al, Si, and Mg, and a phosphoric acid compound. The filler layer may be formed by applying a slurry containing the filler on the surface of the positive electrode 11, the negative electrode 12, or the separator 13.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

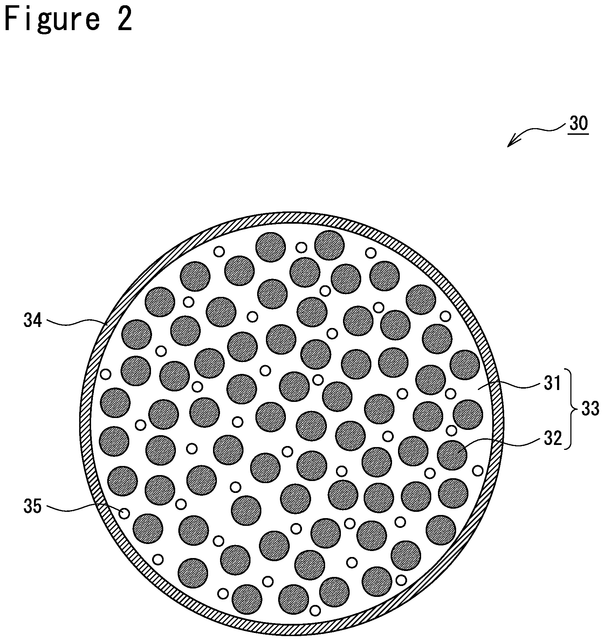

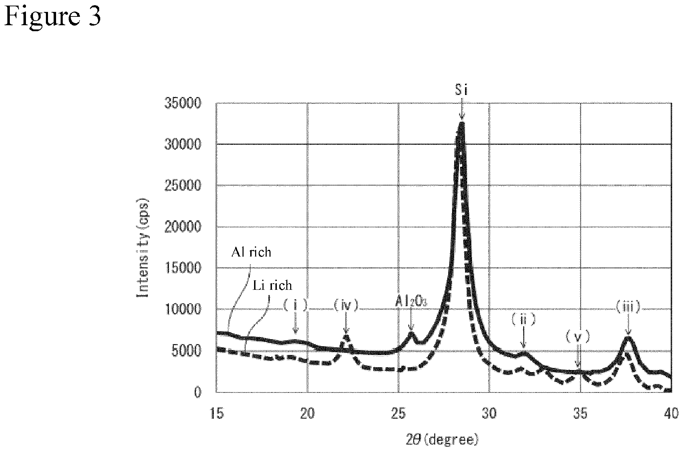

Hereinafter, the negative electrode active material will be described in detail with reference to FIG. 2 and FIG. 3.

FIG. 2 is a schematic view illustrating a cross section of a composite particle 30 of an example of an embodiment. The negative electrode 12 includes at least the composite particle 30 as the negative electrode active material, and preferably includes the composite particle 30 and a carbon material. Use in combination of the composite particle 30 and the carbon material as the negative electrode active material easily achieves both of the high capacity and the excellent cycle characteristics. A content of the carbon material is preferably less than or equal to 98 mass%, more preferably greater than or equal to 70 mass% and less than or equal to 98 mass%, and particularly preferably greater than or equal to 75 mass% and less than or equal to 95 mass% relative to a total mass of the negative electrode active material.

Examples of the carbon material may include graphite, easily graphitized carbon (soft carbon), and hardly graphitized carbon (hard carbon). Among these, graphite, which has excellent stability of charge and discharge and has a small irreversible capacity, is preferable. The graphite may be any of: artificial graphite such as massive artificial graphite (MAG) and graphitized mesophase-carbon microbead (MCMB); and natural graphite such as flake graphite, massive graphite, and amorphous graphite.

As illustrated in FIG. 2, the composite particle 30 includes a lithium aluminate phase 31 and a silicon phase 32 dispersed in the lithium aluminate phase 31. The composite particle 30 preferably includes a conductive layer 34 formed on surfaces of base particles 33 composed of the lithium aluminate phase 31 and the silicon phase 32. The base particles 33 have a sea-island structure in which the fine silicon phase 32 is dispersed in a matrix of the lithium aluminate phase 31. Although gaps 35 are present inside the base particles 33, the amount of the gaps in the base particles 33 is small, and in the present embodiment, the porosity before first charge and discharge is less than or equal to 25%.

The lithium aluminate phase 31 has more excellent alkali resistance than a lithium silicate phase in LSX particles. Thus, use of the composite particle 30 as the negative electrode active material inhibits side reactions with Li ions during initial charge compared with a case of using LSX to inhibit deterioration of the negative electrode active material due to the side reactions and decrease in an initial capacity due to the deterioration. That is, decrease in initial charge-discharge efficiency is highly inhibited.

The composite particle 30 may substantially not include lithium silicate and SiO₂. Although the composite particle 30 may include lithium silicate and SiO₂, their contents are desirably small. The total content of lithium silicate and SiO₂ in the composite particle 30 is, for example, less than or equal to 3 mass%.

In the composite particle 30, a content rate of aluminum (Al) (MAl) relative to a total mass of elements other than oxygen is preferably greater than or equal to 10 mass% and less than or equal to 47 mass%. A content rate of lithium (Li) (MLi) relative to the total mass of elements other than oxygen is preferably greater than or equal to 0.7 mass% and less than or equal to 13.5 mass%. When the content rate of Al (MAl) and the content rate of Li (MLi) are within the above ranges, the aluminate phase having excellent stability and ion conductivity is easily obtained. The above stability includes both of chemical stability (alkali resistance) and thermal stability.

A ratio (MLi/MAI) of the content rate of lithium (MLi) to the content rate of aluminum (MAl) is preferably greater than or equal to 0.01 and less than or equal to 0.50, and more preferably greater than or equal to 0.05 and less than or equal to 0.25 from the viewpoints of stability and ion conductivity of the lithium aluminate phase 31. The content rate (MAl) is more preferably greater than or equal to 11.5 mass% and less than or equal to 45.5 mass%. The content rate (MLi) is more preferably greater than or equal to 1.0 mass% and less than or equal to 9.5 mass%, and particularly preferably greater than or equal to 1.5 mass% and less than or equal to 3.5 mass%.

In the composite particle 30, a content rate of silicon (Si) (MSi) relative to the total mass of elements other than oxygen is preferably greater than or equal to 40 mass% and less than or equal to 90 mass%, and more preferably greater than or equal to 50.8 mass% and less than or equal to 85.5 mass%. In this case, both of the high capacity and the good cycle characteristics are easily achieved. The content rate of Si (MSi) refers to an amount of Si constituting the silicon phase 32 in the composite particle 30.

In an X-ray diffraction (XRD) pattern obtained by XRD measurement of the composite particle 30 (base particles 33), a peak derived from the lithium aluminate phase is observed near 2θ=x°. "x°" is at least one selected from the group consisting of 19.4°, 22.3°, 31.9°, 34.3°, and 37.5°. For X-ray in the XRD measurement, Kα ray of Cu is used. The description "near x°" herein means being within a range of, for example, x±1°.

In the lithium aluminate phase 31, a highly crystalline fine Al₂O₃ phase may be dispersed. The Al₂O₃ phase is distributed as islands in the matrix of the lithium aluminate phase 31, for example. In this case, expansion and breakage of the lithium aluminate phase 31 due to expansion and contraction of the silicon phase 32 are easily inhibited to increase the effect of improving the cycle characteristics. When the Al₂O₃ phase is present, in the X-ray diffraction pattern of the composite particle obtained by the X-ray diffraction measurement, a peak derived from the Al₂O₃ phase may be observed near 2θ=25.4°. A content of the Al₂O₃ phase in the composite particle 30 is, for example, less than or equal to 10 mass%.

FIG. 3 indicates an example of the XRD patterns of the composite particle 30 (base particles 33). A solid line in FIG. 3 represents an XRD pattern of Al-rich composite particle 30 with a large MAl/MLi. A broken line in FIG. 3 represents an XRD pattern of Li-rich composite particle 30 with a small MAl/MLi. In both the cases, a peak derived from a Si (111) surface of the silicon phase 32 is observed near 2θ=28°. With the Al-rich composite particle 30, a peak derived from the Al₂O₃ phase is observed near 2θ=25.4°.

In FIG. 3, (i) to (v) represent peaks derived from lithium aluminate. With the Al-rich composite particle 30, peaks derived from Li₂Al₄O₇ and LiAlO₂ in the lithium aluminate phase 31 are observed near 20=19.4° and near 20=31.9° (peaks (i) and (ii) in FIG. 3). With the Al-rich composite particle 30, a peak derived from Li₂Al₄O₇ and LiAl₅O₈ is observed near 20=37.5° (a peak (iii) in FIG. 3). With the Li-rich composite particle 30, peaks derived from LiAlO₂ and Li₅AlO₄ in the lithium aluminate phase 31 are observed near 20=22.3° and near 20=34.3 (peaks (iv) and (v) in FIG. 3).

The base particle 33 of the composite particle 30 has the sea-island structure in which the fine silicon phase 32, which includes island parts, are dispersed in the lithium aluminate phase 31, which is a sea part. The lithium aluminate phase 31 has good ion conductivity, and the silicon phase 32 smoothly occludes and releases Li ions through the lithium aluminate phase 31. In addition, the lithium aluminate phase 31 relaxes an effect of expansion and contraction of the silicon phase 32. The lithium aluminate phase 31 may be amorphous, and the lithium aluminate phase 31 in this case may more effectively relax the effect of expansion and contraction of the silicon phase 32.

In the composite particle 30, a plurality of primary particles including the lithium aluminate phase 31 and the silicon phase 32 is bonded to constitute secondary particles, for example. An average particle diameter of the composite particle 30 (secondary particles) is, for example, greater than or equal to 1 µm and less than or equal to 25 µm, and may be greater than or equal to 4 µm and less than or equal to 15 µm. In this case, stress due to change in volume of the composite particle 30 with charge and discharge is easily relaxed, and good cycle characteristics are easily obtained. In addition, a surface area of the composite particle 30 becomes an appropriate size to inhibit decrease in the capacity due to side reactions with the non-aqueous electrolyte.

The average particle diameter of the composite particle 30 means a particle diameter at which a volumetric integrated value is 50% in a particle size distribution measured by a laser diffraction scattering method (volume-average particle diameter). For the measurement apparatus, "LA-750", manufactured by HORIBA, Ltd., may be used, for example. When the surfaces of the base particles 33 are covered with the conductive layer 34, a thickness of the conductive layer 34 is substantially small so as not to affect the average particle diameter of the composite particle 30, and thereby the average particle diameter of the composite particle 30 having the conductive layer 34 may be regarded as the average particle diameter of the composite particle 30.

The composite particle 30 may be taken out of the battery by the following method. First, the battery in a fully discharged state is disassembled to take out the negative electrode, and the negative electrode is washed with anhydrous ethyl methyl carbonate or dimethyl carbonate to remove the non-aqueous electrolyte component. The negative electrode mixture layer is peeled from copper foil, which is the negative electrode core, and the mixture layer is crushed with a mortar to obtain a sample powder. Then, the sample powder is dried in a dry atmosphere for 1 hour, and immersed in weekly boiled 6-M hydrochloric acid for 10 minutes to remove elements derived from components other than the composite particle. Then, the sample powder is washed with ion-exchanged water, filtered, and dried at 200°C for 1 hour. Thereafter, the conductive layer 34 may be removed by heating to 900°C in an oxygen atmosphere to isolate only the base particles 33. The fully discharged state refers to a state where a depth of discharge (DOD) is greater than or equal to 90% (state of charge (SOC) is less than or equal to 10%).

### [Lithium Aluminate Phase]

The lithium aluminate phase 31 is a phase of a composite oxide including Li, Al, and O. An atomic ratio of O to Al (O/Al) in the lithium aluminate is, for example, greater than or equal to 1.6 and less than or equal to 4. An atomic ratio of Li to Al (Li/Al) in the lithium aluminate is, for example, greater than or equal to 1/5 and less than or equal to 5. Each of the atomic ratios within the above range allows stability and ion conductivity of the lithium aluminate phase 31 to be better.

A composition of the lithium aluminate may be represented by the formula: LiᵤAlO_{(3+u)/2}. From the viewpoints of production ease, stability, ion conductivity, and the like, "u" in the formula is, for example, greater than 0 and less than or equal to 5, and may be greater than 0 and less than or equal to 1. In a case of u=1/5, the composition may be represented by LiAl₅O₈, and in a case of u=1/2, the composition may be represented by Li₂Al₄O₇. In a case of u=1, the composition may be represented by LiAlO₂, and in a case of u=5, the composition may be represented by Li₅AlO₄. The lithium aluminate phase 31 includes, for example, at least one selected from the group consisting of LiAl₅O₈, Li₂Al₄O₇, LiAlO₂, and Li₅AlO₄.

The lithium aluminate phase 31 contains at least boron (B) in addition to Li, Al, and O. Adding a predetermined amount of B in the lithium aluminate phase 31 reduces the gaps 35 in the composite particle 30, resulting in effectively improved cycle characteristics. It is considered that adding the predetermined amount of B lowers a melting point of lithium aluminate to form the dense lithium aluminate phase 31 having a few gaps 35 by calcination.

The lithium aluminate phase 31 may further contain another element M. The element M is, for example, at least one selected from the group consisting of sodium (Na), potassium (K), calcium (Ca), magnesium (Mg), zirconium (Zr), iron (Fe), phosphorus (P), and lanthanum (La). B and the element M included in the lithium aluminate phase 31 may form a compound.

A ratio (MA1/MB) of a content rate of Al (MAl) to a content rate of B (MB) based on a total mass of elements constituting the lithium aluminate phase 31 and the silicon phase 32 other than oxygen is greater than or equal to 1.0 and less than or equal to 30.0. The ratio (MAl/MB) of Al to B within the above range remarkably reduces the gaps 35 formed inside the base particles 33, and inhibits deterioration of the particle structure that is presumably caused by the gaps 35 to effectively improve the cycle characteristics.

If the ratio (MAI/MB) is greater than 30.0, that is, B is excessively few relative to Al, the porosity increases to considerably deteriorate the cycle characteristics. Meanwhile, if the ratio (MAI/MB) is less than 1.0, a degree of increase in the porosity is smaller than the case where the ratio (MAl/MB) is greater than 30.0 but the initial charge-discharge efficiency is considerably decreased. That is, both of good initial charge-discharge efficiency and cycle characteristics may be highly achieved when the ratio (MAl/MB) is greater than or equal to 1.0 and less than or equal to 30.0. The ratio (MAI/MB) is more preferably greater than or equal to 2.0 and less than or equal to 20.0.

The content rate of B (MB) in the base particles 33 is limited with a relationship with the Al amount, and preferably greater than or equal to 1 mass% and 20 mass%, and more preferably greater than or equal to 2 mass% and less than or equal to 15 mass%. In this case, the effect of improving the cycle characteristics becomes more remarkable. As noted above, the content rate of Al (MAl) is preferably greater than or equal to 11.5 mass% and less than or equal to 45.5 mass%, and more preferably greater than or equal to 15 mass% and less than or equal to 30 mass%.

The composite particle 30 preferably has a porosity inside the particle of less than or equal to 25% before first charge and discharge. Since the conductive layer 34 does not affect the porosity of the composite particle 30, the porosity of the composite particle 30 and a porosity of the base particles 33 are substantially equal. The porosity means a proportion of the gaps 35 in the particle cross section of the composite particle 30, and calculated from an SEM image of the particle cross section. Use of the composite particle 30 having a low porosity as the negative electrode active material inhibits deterioration of the particle structure, which is presumably caused by the gaps 35, to remarkably improve the cycle characteristics of the battery.

The porosity of the composite particle 30 is more preferably less than or equal to 20%, and particularly preferably less than or equal to 15%. A lower limit of the porosity is not particularly limited, and an example thereof is 1%. The gaps 35 are substantially uniformly present in an entirety of the base particles 33, for example. As schematically illustrated in FIG. 2, each one gap 35 is small, and a large number of the gaps 35 may be dispersively present in an entirety of the lithium aluminate phase 31, as of the silicon phase 32.

The porosity of the composite particle 30 is calculated by: subjecting the SEM image of the particle cross section to a binarization treatment by using an image analysis software (for example, ImageJ) to extract a region of the gaps 35; and dividing a total area of the gaps 35 by a total area of the particle cross section. The porosity is an average value on 10 particles. The porosity of the composite particle 30 may be regulated at a certain extent by regulating a calcining temperature of the composite particle 30, compressive force applied to the particle during the calcination, the ratio (MLi/MAl), and the like in addition to adding B.

The composite particle 30 preferably has a Vickers hardness of greater than or equal to 300 HV. Since the conductive layer 34 does not affect the Vickers hardness, the Vickers hardness of the composite particle 30 and a Vickers hardness of the base particles 33 are substantially equal. The composite particle 30 having a high Vickers hardness may easily inhibit change in volume of the silicon phase 32 during charge and discharge to reduce deterioration of the particle structure. As a result, the effect of improving the cycle characteristics becomes more remarkable. The Vickers hardness of the composite particle 30 is more preferably greater than or equal to 350 HV, or may be greater than or equal to 400 HV or greater than or equal to 500 HV.

The Vickers hardness of the composite particle 30 may be measured by using a Vickers hardness meter. Specifically, the composite particle 30 are embedded into a thermosetting resin, and polished with polishing paper No. 400 to expose the cross section of the composite particle 30. The cross section is further mirror-finished by polish with polishing paper No. 2000 and buffing. The Vickers hardness is measured under conditions at a load of 1 kg and a holding time of 15 seconds. An upper limit of the Vickers hardness of the composite particle 30 is not particularly limited, and an example thereof is 1500 HV.

Contents of Li, Al, B, and the element M in the lithium aluminate phase 31 may be measured by analyzing the cross section of the negative electrode mixture layer, for example. First, a battery in a fully discharged state is disassembled to take out the negative electrode, the negative electrode is washed with anhydrous ethyl methyl carbonate or dimethyl carbonate to remove the non-aqueous electrolyte component, and dried and a cross-section polisher (CP) is used to obtain the cross section of the negative electrode mixture layer. Then, the cross section of the negative electrode mixture layer is observed by using a scanning electron microscope (SEM).

The content of each element in the lithium aluminate phase 31 is measured by any one of the following methods. The composition of the lithium aluminate phase 31 is found from the content of each element.

### [Energy Dispersive X-ray (EDX)]

From the cross-sectional image of a backscattered electron image of the negative electrode mixture layer, ten of the composite particles 30 having a maximum particle diameter of greater than or equal to 5 µm are randomly selected, and each of them is subjected to elemental mapping analysis by EDX. Content areas of the target elements are calculated by using an image analysis software. The observation magnification is desirably greater than or equal to 2000 and less than or equal to 20000. Measured values of the content areas of the predetermined elements included in the ten particles are averaged. The contents of the target elements are calculated from the obtained average value.

Desired measurement conditions of the cross-sectional SEM-EDX analysis are described below.
Processing apparatus: SM-09010 (Cross Section Polisher), manufactured by JEOL Ltd.
Processing condition: acceleration voltage 6 kV
Current value: 140 µA
Vacuum degree: greater than or equal to 1×10⁻³ Pa and less than or equal to 2×10⁻³ Pa
Measurement apparatus: electron microscope SU-70, manufactured by Hitachi, Ltd.
Acceleration voltage during analysis: 10 kV
Field: free mode
Probe current mode: Medium
Probe current range: High
Anode Ap.: 3
OBJ Ap.: 2
Analysis area: 1-µm square
Analysis software: EDAX Genesis
CPS: 20500
Lsec: 50
Time constant: 3.2

### [Auger Electron Spectrometry (AES)]

From the cross-sectional image of a backscattered electron image of the negative electrode mixture layer ten of the composite particles 30 having a maximum particle diameter of greater than or equal to 5 µm are randomly selected, and each of them is subjected to qualitative and quantitative analysis of the elements by using an AES analyzer (for example, JAMP-9510F, manufactured by JEOL, Ltd.). The measurement conditions may be, for example, an acceleration voltage of 10 kV, a beam current of 10 nA, and an analysis region of 20 µmφ. The contents are calculated by averaging the contents of the predetermined elements included in the ten particles.

The EDX analysis and the AES analysis are performed within a range of an inside with greater than or equal to 1 µm from a circumferential edge of the cross section of the composite particle 30.

### [Inductively Coupled Plasma Atomic Emission Spectrometry (ICP)]

A sample of the composite particles 30 is entirely dissolved in a heated acid solution (mixed acid of hydrofluoric acid, nitric acid, and sulfuric acid), and carbon being a solution residue is filtered and removed. Thereafter, the obtained filtrate is analyzed by ICP to measure a spectrum intensity of each element. Subsequently, a calibration curve is prepared by using a commercially available standard solution of the element to calculate the content of each element included in the composite particles 30.

Each element may also be quantified by using electron probe micro analyzer (EPMA), laser ablation ICP mass spectrometry (LA-ICP-MS), X-ray photoelectron spectrometry (XPS), or the like. The contents of B, Na, K, and Al included in the composite particles 30 may also be quantitatively analyzed in accordance with JIS R3105 (1995) (Methods for chemical analysis of borosilicate glasses). The content of Ca may be quantitatively analyzed in accordance with JIS R3101 (1995) (Methods for chemical analysis of Soda-Lime-Magnesia-Silica glasses).

A carbon content included in the composite particles 30 may be measured by using a carbon/sulfur analyzer (for example, EMIA-520 model, manufactured by HORIBA, Ltd.). The sample is weighed on a magnetic board, a burning auxiliary is added, and the sample is inserted into a burning furnace (carrier gas: oxygen) heated to 1350°C to detect an amount of carbon dioxide gas generated in the burning with infrared absorption. A calibration curve is prepared by using, for example, carbon steel manufactured by Bureau of Analysed Samples. Ltd. (carbon content: 0.49%) to calculate the carbon content in the sample (high frequency induction heating furnace burning - infrared absorption method).

An oxygen content included in the composite particles 30 may be measured by using an oxygen/nitrogen/hydrogen analyzer (for example, EGMA-830 model, manufactured by HORIBA, Ltd.). The sample is added into a Ni capsule, and fed into a carbon crucible heated at an electric power of 5.75 kW together with Sn pellets and Ni pellets, which are to be a flux) to detect released carbon monoxide gas. A calibration curve is prepared by using a standard sample Y₂O₃ to calculate the oxygen content in the sample (inert gas melting - nondispersive infrared absorption method).

A Si amount constituting the silicon phase 32 in the composite particles 30 may be quantified by using Si-NMR. Desired measurement conditions of the Si-NMR are described below.

Measurement apparatus: solid nuclear magnetic resonance spectrum measurement apparatus (INOVA-400), manufactured by VARIAN, Inc.
Probe: Varian 7 mm CPMAS-2
MAS: 4.2 kHz
MAS speed: 4 kHz
Pulse: DD (45°-pulse + signal capturing time 1H decoupling)
Repetition time: greater than or equal to 1200 sec and less than or equal to 3000 sec
Observation width: 100 kHz
Observation center: near -100 ppm
Signal capturing time: 0.05 sec
Number of scans: 560
Sample amount: 207.6 mg

### [Silicon Phase]

The silicon phase 32 is a phase of single Si, and repeatedly occludes and releases Li ions with charge and discharge of the battery. The capacity is exhibited by a Faraday reaction involved with the silicon phase 32. The silicon phase 32, which has a large capacity, causes a large degree of expansion and contraction with charge and discharge, but the silicon phase 32 is dispersed in the lithium aluminate phase 31. Therefore, stress due to the expansion and contraction of the silicon phase 32 is relaxed by the lithium aluminate phase 31.

The silicon phase 32 is composed of, for example, a plurality of crystallites. A crystallite size of the silicon phase 32 calculated with Scherrer equation from a half-value width of a diffraction peak of a Si (111) surface obtained by XRD measurement of the composite particles 30 (base particles 33) is preferably less than or equal to 30 nm, more preferably less than or equal to 20 nm, and particularly preferably less than or equal to 15 nm. In this case, change in volume of the composite particles 30 due to expansion and contraction of the silicon phase 32 with charge and discharge may be reduced, and the effect of improving the cycle characteristics becomes more remarkable.

A lower limit of the crystallite size of the silicon phase 32 is not particularly limited, and an example thereof is 1 nm. An example of the preferable crystallite size of the silicon phase 32 is greater than or equal to 1 nm and less than or equal to 15 nm, and may be greater than or equal to 5 nm and less than or equal to 11 nm. The crystallite size of the silicon phase 32 of greater than or equal to 1 nm may reduce the surface area of the silicon phase 32, for example, to hardly deteriorate the silicon phase 32 with generation of an irreversible capacity. The crystallite size of less than or equal to 15 nm easily uniformizes expansion and contraction of the silicon phase 32 to effectively relax the stress generated in the composite particles 30.

The silicon phase 32 is of, for example, particles at least before first charge. An average particle diameter of the particulate silicon phase 32 is preferably less than or equal to 500 nm, more preferably less than or equal to 200 nm, and particularly preferably less than or equal to 50 nm. The average particle diameter of the silicon phase 32 is, after the first charge, preferably less than or equal to 400 nm, and more preferably less than or equal to 100 nm. Fining and dispersing the silicon phase 32 reduce change in volume of the composite particles 30 during charge and discharge to further improve structural stability of the composite particles 30. The average particle diameter of the silicon phase 32 is measured by using a cross-sectional image of the composite particles 30 obtained with an SEM. Specifically, the average particle diameter of the silicon phase 32 is determined by averaging maximum diameters of random 100 silicon phases 32.

A content rate of the silicon phase 32 in the composite particles 30 is preferably greater than or equal to 30 mass%, more preferably greater than or equal to 35 mass%, and particularly preferably greater than or equal to 55 mass% from the viewpoint of increase in the capacity. An upper limit of the content rate of the silicon phase 32 is preferably less than or equal to 95 mass%, more preferably less than or equal to 75 mass%, and particularly preferably less than or equal to 70 mass% from the viewpoint of achievement of the good cycle characteristics. In this case, a silicon phase 32 uncovered with the lithium aluminate phase 31 and exposed to the surface of the composite particles 30 is reduced to inhibit side reactions between the non-aqueous electrolyte and the silicon phase 32.

### [Conductive Layer]

As noted above, the composite particle 30 preferably has the conductive layer 34 formed on the surfaces of the base particle 33 composed of the lithium aluminate phase 31 and the silicon phase 32. The conductive layer 34 covers at least a part of the surface of the base particle 33, and preferably covers the substantially entire surfaces of the base particle 33. The conductive layer 34 is a thin film layer including a conductive material, and improves conductivity of the composite particle 30. A thickness of the conductive layer 34 is preferably small so as not to affect the average particle diameter of the composite particle 30. The thickness of the conductive layer 34 is preferably greater than or equal to 1 nm and less than or equal to 200 nm, and more preferably greater than or equal to 5 nm and less than or equal to 100 nm with considering achievement of conductivity and diffusibility of Li ions. The thickness of the conductive layer 34 may be measured by cross-sectional observation of the composite particle using an SEM or a transmission electron microscope (TEM).

The conductive material constituting the conductive layer 34 is preferably a conductive carbon material. As the carbon material, amorphous carbon, graphite (natural graphite, artificial graphite, graphitized mesophase carbon, and the like), soft carbon, hard carbon, and the like may be used. Among these, amorphous carbon is preferable in terms of ease of forming the thin conductive layer 34 covering the surfaces of the base particles 33. Examples of the amorphous carbon include carbon black, calcined pitch, cokes, and active carbon.

### [Method for Manufacturing Composite Particles]

The composite particles 30 are manufactured by a manufacturing method including the following first to fifth steps, for example.

First step: a step of obtaining lithium aluminate being a raw material (hereinafter, referred to as "raw material aluminate").

Second step: a step of forming a composite of the raw material aluminate and a raw material silicon and dispersing the silicon phase 32 in the lithium aluminate phase 31 to obtain a composite intermediate.

Third step: a step of thermally treating the composite intermediate to obtain a calcined product including the lithium aluminate phase 31 and the silicon phase 32 dispersed in the lithium aluminate phase 31.

Fourth step: a step of crushing the calcined product to obtain the composite particles 30.

### [First Step]

The first step includes, for example: a step of mixing an aluminum compound, a lithium compound, and a boron compound to obtain a mixture; and a step of calcining the mixture to obtain the raw material aluminate. The calcination is performed in an oxidative atmosphere, for example. The calcining temperature is preferably greater than or equal to 400°C and less than or equal to 1200°C, and more preferably greater than or equal to 700°C and less than or equal to 1100°C.

Examples of the aluminum compound include aluminum oxide, aluminum hydroxide, and aluminum carbonate. The aluminum compound may be used singly, or may be used in combination of two or more. Examples of the lithium compound include lithium carbonate, lithium oxide, lithium hydroxide, and lithium hydride. The lithium compound may be used singly, or may be used in combination of two or more. Examples of the boron compound include boron oxide, boric acid, borax, sodium tetraborate. The boron compound may be used singly, or may be used in combination of two or more.

In the first step, the aluminum compound that has not reacted with the lithium compound in the step of preparing the raw material aluminate may remain in the raw material aluminate. If the amount of the used aluminum compound relative to the lithium compound is large, the aluminum compound tends to remain. When the aluminum compound remaining in the raw material aluminate is Al₂O₃, an Al₂O₃ phase dispersed in the lithium aluminate phase 31 may be formed in the finally obtained composite particles 30.

### [Second Step]

In the second step, for example, the mixture of the raw material aluminate and the raw material silicon is crushed while applying shearing force to the mixture to obtain the fined composite intermediate. An example includes a method of mixing the raw material aluminate and the raw material silicon at a predetermined mass ratio, and fining the mixture by using a crushing machine such as a ball mill.

For the raw material silicon, silicon crude particles having an average particle diameter of greater than or equal to several micrometers and less than or equal to several tens of micrometers are used. The silicon particles are preferably prepared so that the crystallite size of the silicon phase 32 calculated with Scherrer equation from the half-value width of the diffraction peak of the XRD pattern attributed to the Si (111) surface is less than or equal to 15 nm. Note that it is also acceptable that the crushing machine is not used, and silicon nanoparticles and nanoparticles of the raw material aluminate are synthesized and mixed.

### [Third Step]

In the third step, for example, the fined composite intermediate is calcined while applying pressure to the composite intermediate by a hot-pressing or the like to obtain the calcined product. The composite intermediate is preferably calcined under an inert atmosphere (for example, atmosphere such as argon or nitrogen). An example of the calcining temperature is greater than or equal to 450°C and less than or equal to 1000°C. The calcining temperature within the above range easily forms the structure in which the minute silicon phase 32 is dispersed in the lithium aluminate phase 31 with low crystallinity. The raw material aluminate is stable at this temperature, and hardly reacts with silicon.

The calcining temperature in the third step is preferably greater than or equal to 550°C and less than or equal to 900°C, and more preferably greater than or equal to 650°C and less than or equal to 850°C. The calcining time is, for example, greater than or equal to 1 hour and less than or equal to 10 hours. The calcination condition in the third step also affects the crystallite of the silicon phase 32, and a higher calcining temperature typically yields a larger crystallite size.

### [Fourth Step]

The fourth step is a step of crushing the base particles 33 so as to have desired particle size distribution. The base particles 33 are crushed so that the average particle diameter is greater than or equal to 1 µm and less than or equal to 25 µm, for example.

### [Fifth Step]

The steps of manufacturing the composite particles 30 of the present embodiment include a fifth step of forming the conductive layer 34 on the surfaces of the base particles 33. The conductive material constituting the conductive layer 34 is preferably the conductive carbon material as noted above. Examples of a method for covering the surfaces of the base particles 33 with the carbon material may include: a CVD method using a hydrocarbon gas such as acetylene and methane as a raw material; and a method of mixing coal pitch, petroleum pitch, phenol resin, or the like with the base particles 33 and heating and carbonizing the mixture. Onto the surfaces of the base particles 33, carbon black may adhere.

In the fifth step, for example, the mixture of the base particles 33 and the carbon material is heated in an inert atmosphere (for example, an atmosphere such as argon, nitrogen, or the like) at greater than or equal to 700°C and less than or equal to 950°C to obtain the composite particles 30 in which the conductive layer 34 is formed on the surfaces of the base particles 33.

### EXAMPLES

Hereinafter, the present disclosure will be further described with Experimental examples, but the present disclosure is not limited to these Experimental examples.

### <Experimental Example 1>

### [Preparation of Composite Particles]

### (First Step)

Al₂O₃, Li₂CO₃ and B₂O₃ were mixed, and this mixture was calcined in air at 750°C for 10 hours to obtain a raw material aluminate. In the first step, a mixing ratio between Al₂O₃, Li₂CO₃ and B₂O₃ was regulated so that each constituent element in a lithium aluminate phase had an element ratio shown in Table 1. The raw material aluminate was crushed so that the average particle diameter was 10 µm.

### (Second Step)

A raw material silicon (3N, average particle diameter: 10 µm) and the raw material aluminate (average particle diameter: 10 µm) obtained in the first step were mixed. In the second step, a mixing ratio between the raw material silicon and the raw material aluminate were regulated so that each element to constitute the composite particles had an element ratio shown in Table 1. The mixture was poured into a pot (made of SUS, capacity: 500 mL) of a planetary ball mill (P-5, manufactured by Fritsch GmbH), 24 balls (diameter: 20 mm) made of SUS were added into the pot, the lid was closed, and the mixture was subjected to a crushing treatment in an inert atmosphere at 200 rpm for 50 hours.

### (Third Step)

The powdery mixture obtained in the second step was taken out in an inert atmosphere, and calcined in the inert atmosphere by using a hot-pressing machine while applying a pressure (200 MPa) at 800°C for 4 hours to obtain a sintered product of the mixture.

### (Fourth Step)

The sintered product obtained in the third step was crushed, and passed through a 40-µm mesh to obtain base particles in which a silicon phase was dispersed in a lithium aluminate phase containing a predetermined amount of B.

### (Fifth Step)

Coal pitch (MCP250, manufactured by JFE Chemical Corporation) and the base particles obtained in the fourth step were mixed. This mixture was calcined in an inert atmosphere at 800°C for 5 hours to form a conductive layer including a conductive carbon material on surfaces of the base particles. A covering amount of the conductive layer was 5 mass% relative to a total mass of the base particles and the conductive layer. Thereafter, a sieve was used to obtain composite particles having the conducive layer and an average particle diameter of 5 µm.

In an XRD pattern of the composite particles obtained by XRD measurement, peaks derived from the silicon phase and the lithium aluminate phase were checked. A crystallite size of the silicon phase in the composite particles determined by the above method was 9.7 nm. Content rates of Si, Li, Al, and B relative to a total mass of the elements constituting the lithium aluminate phase and the silicon phase other than oxygen, and a porosity in the base particles were determined by the above methods. The measurement results are shown in Table 1.

### [Production of Negative Electrode]

A mixture in which the composite particles and graphite were mixed at a mass ratio of 5:95 was used as a negative electrode active material. Into a negative electrode mixture including the negative electrode active material, a Na salt of CMC, and SBR at a mass ratio of 97.5:1:1.5, water was added and the mixture was stirred to prepare a negative electrode slurry. Then, the negative electrode slurry was applied on surfaces of a negative electrode core composed of copper foil, and the applied film was dried, and then rolled to produce a negative electrode in which a negative electrode mixture layer having a density of 1.5 g/cm³ was formed on both the surfaces of the copper foil.

### [Production of Positive Electrode]

Into a positive electrode mixture including lithium cobaltate, acetylene black, and PVDF at a mass ratio of 95:2.5:2.5, N-methyl-2-pyrrolidone (NMP) was added, and the mixture was stirred to prepare a positive electrode slurry. Then, the positive electrode slurry was applied on surfaces of a positive electrode core composed of aluminum foil, the applied film was dried, and rolled to produce a positive electrode in which a positive electrode mixture layer having a density of 3.6 g/cm³ was formed on both the surfaces of the aluminum foil.

### [Preparation of Non-Aqueous Electrolyte]

Into a solvent in which ethylene carbonate (EC) and diethyl carbonate (DEC) were mixed at a volume ratio (25°C) of 3:7, LiPF₆ was dissolved at a concentration of 1.0 mol/L to prepare a non-aqueous electrolyte.

### [Production of Non-Aqueous Electrolyte Secondary Battery]

The positive electrode and the negative electrode to which a lead was attached were wound via a separator to produce a wound electrode assembly. The electrode assembly was inserted into an exterior made of an aluminum laminate film, dried in vacuo at 105°C for 2 hours, then the non-aqueous electrolyte was injected, and an opening of the exterior was sealed to obtain a non-aqueous electrolyte secondary battery A1.

### <Experimental Examples 2 to 5>

Non-aqueous electrolyte secondary batteries A2 to A5 were produced by preparing the composite particles in the same manner as in Experimental example 1 except that, in the preparation of the composite particles, the raw material aluminate was prepared and mixed with the raw material silicon so that the content rates of Si, Li, Al, and B were values shown in Table 1.

### <Experimental Example 6>

A non-aqueous electrolyte secondary battery A6 was produced by preparing the composite particles in the same manner as in Experimental example 5 except that, in the preparation of the composite particles, the calcining temperature in the third step and the fifth step was changed to 900°C.

### <Experimental Example 7>

A non-aqueous electrolyte secondary battery B1 was produced by preparing the composite particles in the same manner as in Experimental example 1 except that, in the preparation of the composite particles, B₂O₃ was not added, and the raw material aluminate was prepared and mixed with the raw material silicon so that the content rates of Si, Li, and Al were values shown in Table 1.

### <Experimental Examples 8 and 9>

Non-aqueous electrolyte secondary batteries B2 and B3 were produced by preparing composite particles in the same manner as in Experimental example 1 except that, in the preparation of the composite particles, the raw material aluminate was prepared and mixed with the raw material silicon so that the content rates of Si, Li, Al and B were values shown in Table 1.

First charge-discharge efficiency and a capacity retention of each of the batteries of Experimental examples were evaluated by the following methods. Table 1 shows the evaluation results together with the composition, the calcining conditions, the porosity, and the Si crystallite diameter of the composite particles (negative electrode active material).

### [First Charge-Discharge Efficiency]

A charge capacity and a discharge capacity of each of the evaluation target batteries were determined with the following charge and discharge, and a rate of the discharge capacity to the charge capacity was calculated as first charge-discharge efficiency.

### <Charge>

The evaluation target battery was charged at 25°C at a constant current of 1 It (800 mA) until a voltage reached 4.2 V, and then charged at a constant voltage of 4.2 V until a current reached 1/20 It (40 mA).

### <Discharge>

After rest for 10 minutes, the battery was discharged at 25°C at a constant current of 1 It (800 mA) until the voltage reached 2.75 V.

### [Capacity Retention (Evaluation of Cycle Characteristics)]

The above charge and discharge were performed with 200 cycles, and the capacity retention was calculated with the following formula. Capacity retention (%) = (Discharge capacity at 200th cycle / Discharge capacity at 1st cycle) × 100

**[Table 1]**

| | Si (wt%) | Li (wt%) | Al (wt%) | B (wt%) | Al/B | Calcining temperature (°C) | Porosity (%) | Si crystallite diameter (nm) | Capacity retention (%) | Initial efficiency (%) |
|---|---|---|---|---|---|---|---|---|---|---|
| A1 | 71.1 | 2.0 | 23.7 | 3.2 | 7.5 | 800 | 9 | 9.7 | 86 | 88 |
| A2 | 71.6 | 2.1 | 21.9 | 4.4 | 5.0 | 800 | 6 | 8.1 | 88 | 87 |
| A3 | 72.6 | 2.3 | 17.9 | 7.2 | 2.5 | 800 | 4 | 8.8 | 89 | 83 |
| A4 | 70.7 | 3.2 | 24.5 | 1.6 | 15.0 | 800 | 11 | 10.8 | 86 | 89 |
| A5 | 71.6 | 3.4 | 20.8 | 4.2 | 5.0 | 800 | 8 | 10.7 | 87 | 89 |
| A6 | 71.1 | 2.0 | 23.7 | 3.2 | 7.5 | 900 | 6 | 17.4 | 82 | 89 |
| B1 | 70.0 | 1.8 | 28.2 | 0 | | 800 | 38 | 11.0 | <55 | 89 |
| B2 | 70.2 | 1.9 | 27.2 | 0.7 | 37.4 | 800 | 28 | 12.5 | 70 | 89 |
| B3 | 74.5 | 2.7 | 10.4 | 12.5 | 0.8 | 800 | 14 | 7.7 | 88 | 76 |

As shown in Table 1, all of the batteries of Experimental examples 1 to 6 have high capacity retention after the charge-discharge test compared with the batteries of Experimental examples 7 and 8, and have excellent cycle characteristics. The composite particles containing no B or the composite particles having the ratio (MAl/MB) of the content rate of Al (MAl) to the content rate of B (MB) of greater than 30 had a porosity of greater than 25%, and the batteries of Experimental examples 7 and 8, which used these composite particles as the negative electrode active material, were confirmed to exhibit considerably deteriorated cycle characteristics.

In addition, all of the batteries of Experimental examples 1 to 6 have excellent initial charge-discharge efficiency compared with the battery of Experimental example 9. The composite particles having the ratio (MAl/MB) of less than 1 had a porosity of 14%, and the battery of Experimental example 9, which used these composite particles as the negative electrode active material, was confirmed to exhibit considerably deteriorated initial charge-discharge efficiency. That is, both of good initial charge-discharge efficiency and cycle characteristics may be highly achieved only when the composite particles having the ratio (MAl/MB) of greater than or equal to 1.0 and less than or equal to 30.0 are used as the negative electrode active material.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Composite particle, 31 Lithium aluminate phase, 32 Silicon phase, 33 Base particle, 34 Conductive layer, 35 Gap

## Claims

1. A negative electrode active material for a non-aqueous electrolyte secondary battery, comprising composite particles including:
a lithium aluminate phase; and
a silicon phase dispersed in the lithium aluminate phase, wherein
the lithium aluminate phase contains boron, and
a ratio (MA1/MB) of a content rate of aluminum (MAl) to a content rate of boron (MB) based on a total mass of elements constituting the lithium aluminate phase and the silicon phase other than oxygen is greater than or equal to 1.0 and less than or equal to 30.0.

2. The negative electrode active material for a non-aqueous electrolyte secondary battery according to claim 1, wherein the composite particles have a porosity inside the particles of less than or equal to 25% before first charge and discharge.

3. The negative electrode active material for a non-aqueous electrolyte secondary battery according to claim 1 or 2, wherein a crystallite size of the silicon phase is less than or equal to 15 nm, the crystallite size being calculated with Scherrer equation from a half-value width of a diffraction peak of a Si (111) surface obtained by X-ray diffraction measurement of the composite particles.

4. The negative electrode active material for a non-aqueous electrolyte secondary battery according to any one of claims 1 to 3, wherein the content rate of boron (MB) is greater than or equal to 1 mass% and 15 mass%.

5. The negative electrode active material for a non-aqueous electrolyte secondary battery according to any one of claims 1 to 4, wherein the composite particles include a conductive layer formed on surfaces of base particles composed of the lithium aluminate phase and the silicon phase.

6. A non-aqueous electrolyte secondary battery, comprising:
a positive electrode;
a negative electrode; and
a non-aqueous electrolyte,
wherein the negative electrode includes the negative electrode active material according to any one of claims 1 to 5.
